(19) Europäisches Patentamt
European Patent Office
Office européen des brevets

(11) Veröffentlichungsnummer: **0 082 291**
**B1**

(12) **EUROPÄISCHE PATENTSCHRIFT**

(45) Veröffentlichungstag der Patentschrift: **24.04.85**

(51) Int. Cl.⁴: **C 09 D 3/48**, C 08 J 3/24, C 08 K 5/11, C 08 K 5/20// C09D5/44, C09D3/58

(21) Anmeldenummer: **82110381.9**

(22) Anmeldetag: **11.11.82**

(54) **Wärmehärtbare kationische wasserverdünnbare Bindemittel.**

(30) Priorität: **26.11.81 AT 5083/81**

(43) Veröffentlichungstag der Anmeldung: **29.06.83 Patentblatt 83/26**

(45) Bekanntmachung des Hinweises auf die Patenterteilung: **24.04.85 Patentblatt 85/17**

(84) Benannte Vertragsstaaten: **BE DE FR GB IT SE**

(56) Entgegenhaltungen:
**EP-A- 0 012 463**
**AT-B- 356 779**

(73) Patentinhaber: **Vianova Kunstharz Aktiengesellschaft**
**A-8402 Werndorf (AT)**

(72) Erfinder: **Schmölzer, Gerhard, Dr.**
**Eisteichgasse 37**
**A-8010 Graz (AT)**
Erfinder: **Verdino, Heiner, Dr.**
**Grillparzerstrasse 23**
**A-8010 Graz (AT)**
Erfinder: **Daimer, Wolfgang, Dipl.-Ing.**
**Mariatrosterstrasse 12**
**A-8043 Graz (AT)**

(74) Vertreter: **Pitter, Robert, Dr. et al**
**Leechgasse 21 Postfach 191**
**A-8010 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 082 291 B1

**Beschreibung**

Die Erfindung betrifft wärmehärtbare kationische wasserverdünnbare Bindemittel für die Formulierung von Lacken, welche nach den üblichen Applikationsverfahren, vorzugsweise im ETL-Verfahren, aufgebracht werden können. Insbesonders betrifft die Erfindung ein Härtungssystem für solche Bindemittel, wobei angenommen werden kann, daß die Vernetzung im wesentlichen durch Umesterung erfolgt.

Die Vernetzung von wasserlöslichen oder wasserverdünnbaren. Lackbindemitteln durch Multiveresterung wird bereits in den AT-PSS 268 675 und 267 185 beschrieben, doch ist die dort beschriebene Vernetzungsreaktion auf eine bestimmte Harzklasse, nämlich Adduktverbindungen von α,β-äthylenisch ungesättigten Dicarbonsäureanhydriden, wie Maleinsäureanhydrid an ungesättigte Ölfettsäuren und deren Derivate in Kombination mit Polyhydroxylverbindungen beschränkt.

In der Europäischen Patentanmeldung EP 0 012 463 A1 werden wärmehärtende Bindemittelzusammensetzungen beschrieben, bei welchen die Vernetzung beim Einbrennen durch Umesterung zwischen den Hydroxylgruppen einer Harzkomponente, welche frei von Säuregruppen und äthylenisch ungesättigten Gruppierungen ist, und einem säuregruppenfreien Polyester mit mehr als einer β-Hydroxygruppe in Gegenwart eines Umesterungskatalysators erfolgt. Soferne die Harzkomponente ein kationisches wasserverdünnbares Harz ist, kann das Bindemittelsystem auch durch ET-Lackierung appliziert werden.

Die Einführung der für Umesterungsreaktionen besonders geeigneten β-Hydroxyestergruppierung erfolgt gemäß dieser Literaturstelle durch Umsetzung eines Polycarbonsäureanhydrids mit Glykolen, Glykolmonoäthern, Polyolen und/oder vorzugsweise mit Monoepoxiden. Bevorzugt werden als β-Hydroxygruppen tragende Polyester solche aus Trimellithsäureanhydrid und einem Glycidylester von gesättigten aliphatischen Carbonsäuren mit 9 bis 11 C-Atomen, deren Carboxylgruppe an ein tertiäres Kohlenstoffatom gebunden ist (in der Literaturstelle als « Glycidylester C 10 E » bezeichnet) eingesetzt. Bei der Vernetzung dieser Bindemittel werden die als β-Hydroxyester gebundenen Glykole bei Einbrenntemperaturen von 150 bis 200 °C, vorzugsweise bei 180 °C abgespalten und aus dem Überzug entfernt. Abgesehen von den — auch bei Verwendung von Umesterungskatalysatoren — notwendigen relativ hohen Einbrenntemperaturen stellt der hohe Anteil an Spaltprodukten einen wesentlichen Nachteil dieser Vernetzungskomponente dar. Überdies müssen dabei hochwertige Lackrohstoffe abgespalten und aus dem Lackfilm entfernt werden, was nicht nur aus wirtschaftlichen sondern auch aus ökologischen Gründen unvorteilhaft ist.

In der AT-PS 356 779 werden kathodisch abscheidbare Überzugsmittel für die Elektrotauchlackierung beschrieben, wobei das Bindemittel aus einem Gemisch aus einem kationischen Kunstharz, welches sekundäre und/oder primäre Aminogruppen aufweist und einer Vernetzungskomponente, welche mit $C_1$-$C_6$-Alkanolen veresterte Carboxylgruppen enthält, besteht. Gemäß dieser Patentschrift erfolgt bei Temperaturen über 160 °C die Härtung der abgeschiedenen Filme durch Abspaltung der Veresterungsalkohole aus der Vernetzungskomponente und Amidbildung der freigesetzten Carboxylgruppen mit den sekundären und/oder primären Aminogruppen des Trägerharzes.

Produkte dieser Art haben den Nachteil, daß zur Erzielung einer Vernetzungsdichte, welche die vom Verbraucher geforderten Filmeigenschaften gewährleistet, eine relativ große Anzahl der für die Amidierungsreaktion notwendigen sekundären oder primären Aminogruppen im protonisiertem Trägerharz notwendig sind. Diese Gruppen haben jedoch einen wesentlichen Einfluß auf die Abscheidungscharakteristik bei der Elektrotauchlackierung, wodurch ihre Menge auf einen relativ engen Rahmen begrenzt wird.

Es wurde nun gefunden, daß es möglich ist, die bei den Produkten des Standes der Technik auftretenden Nachteile durch eine spezifische Auswahl sowohl bezüglich des Trägerharzes, d. h. des wasserverdünnbaren kationischen Kunstharzes, als auch bezüglich der Vernetzungskomponente zu überwinden.

Die vorliegende Erfindung betrifft dementsprechend wärmehärtbare kationische, nach Protonisierung der Aminogruppen wasserverdünnbare Bindemittel auf der Basis von Mischungen aus Aminogruppen tragenden Polymeren und einer durch Umesterung bei erhöhter Temperatur mit dem Polymeren filmbildenden Vernetzungskomponente, bestehend aus

(a) 60 bis 95 Gew.-% eines nach Protonisierung der basischen Gruppen wasserlöslichen oder wasserverdünnbaren Polymeren, welches eine Hydroxylzahl von 40 bis 450 mg KOH/g und eine im wesentlichen auf tertiären Aminogruppen beruhende Aminzahl von 20 bis 150 mg KOH/g aufweist und

(b) 5 bis 40 Gew.-% einer Vernetzungskomponente der allgemeinen Formel

$$R_1 - ( - \overset{O}{\overset{\|}{C}} - CH_2 - \overset{O}{\overset{\|}{C}} - O - R_2)_n$$

wobei n einen Wert von 1 bis 5,

$R_1$ einen nach Reaktion mit einer oder mehreren Carboxylgruppen verbleibenden Rest eines Monoalkohols mit 1-8 C-Atomen oder eines Polyols oder eines Polyamins oder einer Polyepoxidverbindung oder eines Polyisocyanats und

$R_2$ einen geradkettigen oder verzweigten Alkylrest mit 1-8 C-Atomen darstellt.

Die Erfindung betrifft weiterhin das Verfahren zur Vernetzung von nach Protonisierung der basischen Gruppen wasserlöslichen oder wasserverdünnbaren Polymeren, welche eine Hydroxylzahl von 40 bis 450 mg KOH/g aufweisen unter Verwendung der obengenannten Vernetzungskomponente.

Gegenüber den in der EP 0 012 463 genannten Produkten zeigen die erfindungsgemäßen Bindemittelsysteme wesentliche Vorteile. So wird durch die Möglichkeit der Verwendung niederer aliphatischer Monoalkohole die Einbrennverluste, d. h. die Menge der bei der Vernetzung abgespaltenen Produkte, dratisch vermindert. Ebenso wird die Art der Spaltprodukte auf eine Verbindungsklasse beschränkt, welche auch bei anderen in der Lackindustrie üblichen Härtungsmechanismen auftreten und daher weder in ökologischer noch in ökonomischer Hinsicht eine neue oder außerordentliche Belastung darstellen. Die erfindungsgemäßen Bindemittel erlauben auch ohne Verwendung zusätzlicher Katalysatoren Einbrenntemperaturen zwischen 160 und 180 °C zur Erzielung von ausgezeichneten Filmeigenschaften.

Gegenüber den Produkten der AT-PS 356 779 gestatten die erfindungsgemäßen Bindemittel die Formulierung von Elektrotauchlacken, welche sowohl hinsichtlich der elektrischen Eigenschaften, wie Abscheidungsspannung, Umgriff oder Filmwiderstand als auch bezüglich der Vernetzungsdichte und damit der korrosionsschützenden bzw. der mechanischen Eigenschaften in weitem Rahmen optimiert werden können.

Als Komponente (a) können im wesentlichen alle nach Protonisierung ihrer basischen Gruppierungen wasserlöslichen oder wasserverdünnbaren Polymeren, wie sie zur Formulierung von Elektrotauchlacken empfohlen werden, eingesetzt werden, soferne sie eine Hydroxylzahl zwischen 40 und 450 mg KOH/g aufweisen. Ihre üblicherweise zwischen 20 und 150 mg KOH/g liegende Aminzahl soll im wesentlichen von tertiären Aminogruppen stammen.

Protonisierbare Polymere, welche für die erfindungsgemäßen Bindemittelsysteme Verwendung finden können, sind aus der Literatur bekannt und sind z. B. in Sammelwerken, wie R.H. CHANDLER, Advances in Electropainting, Verlag R.H. Chandler Ltd., zu finden.

Zu dieser Gruppe von Polymeren zählen Copolymerisate, welche entweder durch Verwendung entsprechender Monomerer oder durch nachträgliche Modifizierung protonisierbare Gruppen aufweisen. Ebenso können entsprechend modifizierte Polyesterharze oder Adduktverbindungen eingesetzt werden.

Eine bevorzugte Gruppe basischer Polymerer stellen modifizierte Epoxidharze dar, wobei insbesonders die Epoxidharz-Amin-Addukte zu nennen sind.

Besonders bevorzugt werden als Komponente (a) Additionsverbindungen von aliphatischen oder cycloaliphatischen Aminen und/oder Alkanolaminen an Glycidyläther des 2,2-Bis(4-hydroxyphenyl)propans der allgemeinen Formel

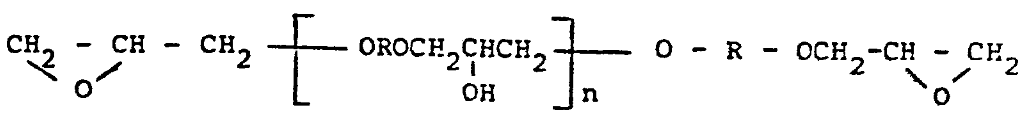

wobei R = 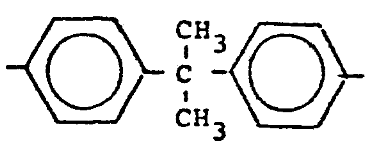

und n eine Zahl zwischen 1 und 5 ist.

In gleicher Weise geeignet sind Glycidyläther von Novolaken mit der allgemeinen Formel

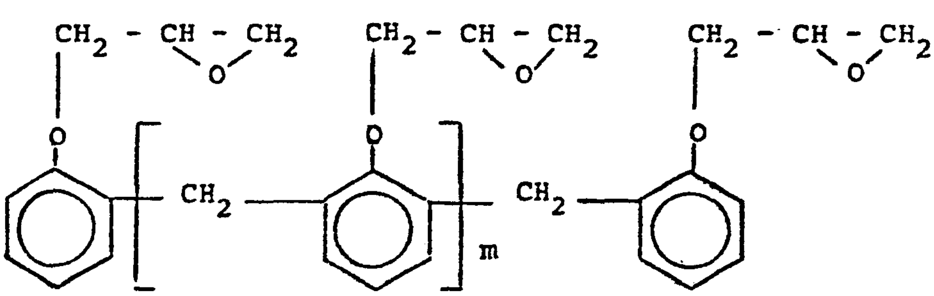

wobei m eine ganze Zahl zwischen 0 und 3 ist.

In geringeren Mengen können auch Glycidyläther von zweiwertigen Alkoholen wie z. B. Polypropylenglykoldiglycidyläther oder Polyäthylenglykoldiglycidyläther zur Modifizierung der vorstehend genannten Glycidyläther mitverwendet werden.

Zur Synthese der Komponente (a) werden die Glycidylfunktionen dieser Epoxidverbindungen in bekannter Weise mit Aminen und Alkanolaminen, die sekundäre Aminogruppen tragen, zu Additionsverbindungen umgesetzt. Die Mengenverhältnisse der Reaktionspartner und die Reaktionsbedingungen werden vorzugsweise so gewählt, daß im Additionsprodukt keine nennenswerten Mengen an Epoxidgruppen bzw. an niedermolekularen Aminen mehr vorhanden sind. Unter den sekundären Aminen seien beispielhaft Dimethylamin, Diäthylamin, Dibutylamin bzw. Diäthanolamin, Diisopropanolamin, N-Methyläthanolamin, Morpholin und Dicyclohexylamin genannt. Gegebenenfalls können auch in Mischung mit den sekundären Monoaminen auch di-sekundäre Diamine, wie das N,N'-Diäthylpropandiamin-1,3 oder primäre Amine zum Einsatz gelangen, wobei zu beachten ist, daß durch diese difunktionalen Verbindungen eine Verknüpfung der Epoxidharze und damit eine Molekulargewichtsvergrößerung stattfindet. Zu dieser Gruppe zählen auch die primär-tertiären Diamine, wie N,N-Dimethylaminopropylamin und N,N-Diäthylaminopropylamin.

Die Adduktbildung zwischen Aminoverbindungen und Epoxidverbindungen verläuft vorzugsweise in Anwesenheit reaktionsinerter Lösungsmittel wie Alkoholen und Glykolmonoäthern bei Reaktionstemperaturen von 40-140 °C bis zur im wesentlichen vollständigen Bindung der Aminverbindung. In manchen Fällen ist es günstig, das basische Polymere durch den Einbau aliphatischer Seitenketten zu flexibilisieren. Dies gelingt durch Umsetzung des hydroxylreichen Polymeren mit ε-Caprolacton bzw. mit den Glycidylestern aliphatischer Monocarbonsäuren. Obwohl der Reaktionsmechanismus noch nicht vollständig geklärt ist wird angenommen, daß dabei esterartige bzw. ätherartige Verknüpfungen entstehen.

Als Komponente (b) wird in den erfindungsgemäßen Bindemitteln eine Vernetzungskomponente der allgemeinen Formel

$$R_1 - ( - \overset{O}{\overset{\|}{C}} - CH_2 - \overset{O}{\overset{\|}{C}} - O - R_2)_n$$

eingesetzt, wobei n einen ganzzahligen Wert von 1 bis 5,

$R_1$ einen nach Reaktion mit einer oder mehreren Carboxylgruppen verbleibenden Rest eines Monoalkohols mit 1-8 C-Atomen oder eines Polyols oder eines Polyamins oder einer Polyepoxidverbindung oder eines Polyisocyanats und

$R_2$ einen geradkettigen oder verzweigten Alkylrest mit 1-8 C-Atomen darstellt.

Wie sich aus der allgemeinen Formel ergibt, handelt es sich dabei im einfachsten Fall um Diester der Malonsäure mit niederen Alkoholen. Es hat sich gezeigt, daß optimale Eigenschaften bezüglich der Reaktivität und damit der zu erzielenden niedrigeren Einbrenntemperatur nur mit dieser Dicarbonsäure erreicht werden können, was sicher auf die Sonderstellung dieser niedrigen Dicarbonsäure und die wechselseitige Aktivierung ihrer Carboxyl- bzw. Estergruppen zurückzuführen ist. Als Veresterungsalkohole können geradkettige oder verzweigte Monoalkohole mit 1 bis 8 Kohlenstoffatomen eingesetzt werden, wobei vorzugsweise Methanol, Äthanol oder die Propanole zum Einsatz kommen. Bei Alkoholen mit mehr als 3 Kohlenstoffatomen ist es im Sinne einer leichteren Abspaltbarkeit vorteilhaft, wenn die Alkohole Substituenten mit negativem Feldeffekt aufweisen. Solche Substituenten sind beispielsweise Halogenatome, $—N^+R_3—COOR$ oder $—O—CH_3$-Gruppen (siehe z. B. H. BEYER, Lehrbuch der organischen Chemie). Für die erfindungsgemäße Verwendung dieser Ester ist es vorteilhaft, wenn deren Siedepunkt über 200 °C liegt. Gegebenenfalls können beim Einbrennen der Lackfilme auftretende Verluste durch größere Einsatzmengen kompensiert werden.

In einer bevorzugten Ausführungsform der Erfindung werden als Vernetzungskomponente polyfunktionale und/oder höhermolekulare Ester verwendet. In diesem Fall bedeutet $R_1$ einen nach der Veresterung einer Carboxylgruppe verbleibenden Rest eines Polyols. Die übrigen Hydroxylfunktionen des Polyols sind dabei teilweise oder vollständig mit einer Monocarbonsäure des Typs

$$HO - \overset{O}{\overset{\|}{C}} - CH_2 - \overset{O}{\overset{\|}{C}} - O - R_2$$

verestert. Die Polyole können entweder definierte Verbindungen, wie Glykole, Glycerin, Trimethyloläthan, Trimethylolpropan, Trimethylolhexan sein, es können jedoch auch niedermolekulare Polyester oder Polymerisate mit endständigen Hydroxylgruppen zum Einsatz gelangen. Anstelle des Polyols können bei diesen höherfunktionellen Vernetzungskomponenten in analoger Weise auch Polyamine, wie Äthylendiamin, Hexamethylendiamin treten, wobei in Analogie zur Esterbindung eine Säureamidbindung gebildet wird.

Die einfachen Malonsäurediester sind Handelsprodukte, deren Herstellung nach den üblichen organisch-präparativen Methoden erfolgt. Bei der Herstellung der höherfunktionellen Ester werden vorzugsweise einfache Diester mit den genannten Polyolen, gegebenenfalls in Anwesenheit von Katalysatoren, umgeestert. Die Mengenverhältnisse der Reaktionspartner werden so gewählt, daß pro Mol Diester vorzugsweise ein Mol Hydroxyl des Polyols angewendet wird. Der bei der partiellen

Umesterung des Diesters freigesetzte Alkohol wird vorzugsweise destillativ entfernt. Die partielle Umesterung des Diesters wird bei Reaktionstemperaturen bis 180 °C bis zum Verbrauch vorzugsweise aller Hydroxylgruppen des Polyols, mithin bis zu einer Hydroxylzahl des Reaktionsproduktes von weniger als 20 mg KOH/g geführt. Die Verwendung reaktionsinerter Lösungsmittel ist fallweise erwünscht aber nicht Bedingung. Die nach der Umesterung gegebenenfalls verbleibenden Restmengen der ursprünglichen Reaktionspartner werden vorzugsweise — z. B. durch Vakuumdestillation — aus dem Reaktionsgemisch entfernt.

In analoger Weise erfolgt bei der Reaktion eines Polyamins mit den einfachen Diestern eine partielle Transamidierung unter Austritt des Alkohols.

In Sinne einer entsprechenden Wirkung als Härtungskomponente soll das Molekulargewicht der polyfunktionellen Vernetzer vorzugsweise jedoch einen Wert von ca. 5 000 nicht überschreiten. Der in der allgemeinen Formel angegebene Index n liegt vorzugsweise zwischen 2 und 5 liegen.

Zur Herstellung der erfindungsgemäßen Bindemittelsysteme werden 60-95 Teile der Komponente (a) mit 5-40 Teilen der Komponente (b) gemischt. Um die erfindungsgemäße Überzugszusammensetzung in eine wasserverdünnbare Form überzuführen, ist eine zumindest teilweise Neutralisation der Aminogruppen mit vorzugsweise organischen Säuren notwendig. Geeignete Säuren sind z. B. Ameisensäure, Essigsäure, Milchsäure. Lacke auf Basis der erfindungsgemäßen Bindemittelsysteme können noch zusätzliche Lösungsmittel, Pigmente und übliche Lackadditive enthalten. Die Mitverwendung von Umesterungs-Katalysatoren, wie sie z. B. oben genannt wurden, ist selbstverständlich möglich und ist vor allem dann zu empfehlen, wenn die gewünschte Einbrenntemperatur nur knapp erreicht wird.

Wäßrige Lösungen oder Dispersionen der erfindungsgemäßen Zusammensetzung können unter Verwendung konventioneller Applikationsmethoden wie Walzauftrag, Tauchen oder Sprühauftrag zur Beschichtung vor allem von Metallen verwendet werden. Bevorzugte Verwendungsform ist die kathodische Elektrotauchlackierung. Dafür werden üblicherweise wäßrige Lösungen oder Dispersionen der beanspruchten Zusammensetzung mit einem Feststoffgehalt von 5-25 % verwendet. Prinzip, Funktionsweise sowie die üblichen Bedingungen der kathodischen Elektrotauchlackierung werden als bekannt angenommen.

Die Aushärtung der Überzüge kann während 15-30 Minuten bei Temperaturen zwischen 150 und 200 °C erfolgen. Die bevorzugten Härtungstemperaturen liegen zwischen 160 und 180 °C. Entsprechend gehärtete Lackfilme zeichnen sich durch hohe Oberflächenglätte, gute Lösungsmittelbeständigkeit und Elastizität sowie durch hervorragenden Korrosionsschutz aus.

Die nachfolgenden Beispiele erläutern die Erfindung, ohne ihren Umfang zu beschränken. Alle Prozentangaben beziehen sich, soweit nichts anderes angegeben ist, auf Gewichtsprozente. Die Bestimmung der angegebenen Kennzahlen erfolgt nach den entsprechenden DIN-Vorschriften. Alle diesbezüglichen Angaben beziehen sich auf Festharz.

Für die nachstehend beschriebene Herstellung der Komponenten werden die üblichen Reaktionsgefäße mit Rührer, Heizung, Temperaturanzeige, Rückfluß- bzw. Destillationskühler und Inertgaszufuhr benötigt.

### Komponente A1

62 g eines Polypropylenglykoldiglycidyläthers (Epoxidäquivalent = 310) und 392 g eines Bisphenolglycidyläthers (Epoxidäquivalent = 490) werden in 90 g Äthylenglykolmonoäthyläther gelöst. Bei 60 °C werden 126 g Diisopropanolamin zugegeben. Die Temperatur wird in einer Stunde auf 120 °C gesteigert und eine weitere Stunde gehalten. Das Reaktionsprodukt hat eine Aminzahl von 90 mg KOH/g und eine Hydroxylzahl von 400 mg KOH/g.

### Komponente A2

190 g Bisphenoldiglycidyläther (1 Epoxidäquivalent) und 1 425 g Bisphenolglycidyläther (3 Epoxidäquivalente) werden bei 100 °C in 597 g Äthylenglykolmonoäthyläther gelöst. Die Lösung wird auf 60 °C gekühlt und mit 126 g Diäthanolamin versetzt. Man steigert die Temperatur während 2 Stunden langsam auf 80 °C. Anschliessend werden 169 g N,N'-Diäthylpropandiamin-1,3 zugegeben und die Temperatur in 2 Stunden auf 120 °C gesteigert. Bei dieser Temperatur werden 478 g eines $C_9$-$C_{11}$ Carbonsäureglycidylesters, dessen Carboxylrest an ein tertiäres C-Atom gebunden ist, zugegeben und anschließend 5 Stunden bei 130 °C unter Rühren belassen. Man verdünnt mit Äthylenglykolmonoäthyläther auf 65 % Harzgehalt. Das Festharz hat eine Aminzahl von 91 mg KOH/g und eine Hydroxylzahl von 265 mg KOH/g.

### Komponente A3

190 g Bisphenoldiglycidyläther (1 Epoxidäquivalent) und 1 425 g Bisphenol-diglycidyläther (3 Epoxidäquivalente) werden in 600 g Diäthylenglykoldiäthyläther bei 100 °C gelöst. Die Lösung wird auf 60 °C gekühlt und mit 400 g Diäthanolamin versetzt. Man erwärmt in 2,5 Stunden auf 120 °C und hält zur Vervollständigung der Reaktion noch eine weitere Stunde bei 120 °C. Es werden 485 g ε-Caprolacton zugesetzt und der Ansatz 6 Stunden bei 130 °C gehalten. Man verdünnt mit Äthylenglykolmonoäthyläther

auf 65 % Harzgehalt. Die Aminzahl der Harzes beträgt 92 mg KOH/g, seine Hydroxylzahl 365 mg KOH/g.

Komponente A4

2 g Azobisisobutyronitril werden in 40 g Isopropanol unter Erwärmen gelöst. Zur klaren Lösung wird bei Rückflußtemperatur (ca. 84 °C) ein Monomerengemisch bestehend aus 20 g Glycidylmethacrylat, 20 g Hydroxyläthylmethacrylat, 20 g Methylmethacrylat und 40 g 2-Äthylhexylacrylat, in dem 2 g Azobisisobutyronitril klar gelöst sind, während 2 Stunden gleichmäßig zugegeben. Die Reaktionsmasse wird weitere 3 Stunden bei Rückflußtemperatur gerührt. Eine homogene Lösung von 16 g Diisopropanolamin in 20 g Äthylenglykolmonobutyläther wird der Reaktionsmasse bei 85 °C rasch zugegeben, anschließend wird 2 Stunden bei 90 °C nachgerührt. Das Produkt wird bei 90 °C mit 13 g Äthylenglykolmonobutyläther und bei 40 °C mit 10 g Aceton verdünnt.

Das Harz hat einen Feststoffgehalt von 57 %, eine Aminzahl von 58 mg KOH/g und eine Hydroxylzahl von 250 mg KOH/g.

Komponente A5

330 g Leinöl, 180 g eines Polyglycidyläthers eines Phenolnovolaks (Epoxidäquivalent ca. 180) und 1 420 g eines Bisphenol-A-Diglycidyläthers (Epoxidäquivalent ca. 475) werden in 400 g Dipropylenglykolmonomethyläther (DPM) gelöst. Die zu diesem Zeitpunkt trübe Lösung wird bei 60 °C mit 83 g (1,2 Äquivalente) Diäthylamin versetzt, wobei die Temperatur durch Kühlung unter 70 °C gehalten wird. Nach 1 Stunde setzt man 169 g N,N'-Diäthylpropandiamin-1,3 (2,6 Äquivalente) zu und läßt die Temperatur auf 120 °C steigen. In dieser Stufe wird das Reaktionsprodukt klar, was auf eine Reaktion zwischen dem Leinöl und dem aminmodifizierten Epoxidharz hindeutet. Nach einer weiteren Reaktionszeit von 1 Stunde bei 120 °C verdünnt man den Ansatz mit DPM auf einen Festkörpergehalt von 70 %. Das Harz weist eine Hydroxylzahl von 114 mg KOH/g und eine Aminzahl von 98 mg KOH/g auf.

Komponente A6

100 g p-tert. Butylphenol und 120 g wässrige Formaldehydlösung (36 %ig) werden bei ca. 30 °C langsam mit 10 g einer 40 %igen wässrigen Natriumhydroxydlösung versetzt. Der Ansatz wird ca. 48 Stunden bei Raumtemperatur gehalten, bis der Gehalt an freiem Formaldehyd auf einen konstant bleibenden Wert abgesunken ist. Nach gutem Einmischen von 12 g 33 %iger Salzsäure wird die wässrige Schicht abgetrennt, die Harzphase wird so lange mit deionisiertem Wasser gewaschen, bis keine Chloridionen mehr nachweisbar sind. Die Ausbeute beträgt ca. 160 g Resolharz.

32 g dieses Resolharzes werden mit 131 g der Komponente A 4 5 Stunden bei 80 °C partiell kondensiert, bis das Produkt nach Neutralisation mit Essigsäure ohne Koagulation wasserverdünnbar ist. Das Produkt liegt in 62 %iger Lösung vor und weist eine Hydroxylzahl von 354 mg KOH/g auf, sowie eine Aminzahl von 44 mg KOH/g.

Komponente A7

In 400 g 2-Äthylhexanol werden 190 g Bisphenoldiglycidyläther (1 Epoxidäquivalent) und 1 425 g Bisphenol-di-glycidyläther (3 Epoxidäquivalente) bei 100 °C gelöst. Die Lösung wird auf 60 °C gekühlt und mit 160 g Diisopropanolamin versetzt. Man steigert die Temperatur während 2 Stunden langsam auf 80 °C. Dann setzt man 132 g N,N'-Dimethylpropandiamin-1,3 zu und steigert die Temperatur in 2 Stunden auf 120 °C. Bei dieser Temperatur werden 480 g eines $C_9$-$C_{11}$-Carbonsäureglycidylesters, dessen Carboxylgruppe an ein tertiäres C-Atom gebunden ist, zugegeben und anschließend 5 Stunden bei 130 °C unter Rühren belassen. Das Produkt hat eine Hydroxylzahl von 209 mg KOH/g und eine Aminzahl von 84 mg KOH/g.

Komponente B1

Als Beispiel für einen einfachen Diester wird Malonsäurediäthylester verwendet. Es kann als handelsübliche Ware eingesetzt werden oder nach literaturbekannten Methoden, z. B. aus dem Kaliumsalz der Cyanessigsäure durch Kondensation mit Äthanol unter der Katalyse konzentrierter Säuren gewonnen werden.

Komponente B2

Als Beispiel für einen polyfunktionellen Ester zum Einsatz als Vernetzungskomponente wird ein Umesterungprodukt aus 396 g Malonsäuredimethylester und 134 g Trimethylolpropan mit 1,1 g Zinkoctoat (8 % Metallgehalt) hergestellt. Das Substanzgemisch wird bei 130 °C ca. 10 Stunden lang umgesetzt, wobei etwa 90 g Methanol als Destillat entweichen. Der fertige polyfunktionelle Ester ist eine farblose Flüssigkeit mit einer Hydroxylzahl von 16 mg KOH/g.

Komponente B3

465 g eines Bisphenol-A-diglycidyläthers (Epoxidäquivalent ca. 195) werden mit 268 g Dimethylolpropionsäure bei 130 °C bis zu einer Säurezahl von weniger als 3 mg KOH/g umgesetzt (Hydroxylzahl ca. 490). Man setzt 260 g 2-Äthylhexanol und 640 g Malonsäurediäthylester zu und hält bei 140-160 °C, bis 180 g Äthanol als Destillat abgetrennt sind. Der Index n in der angegebenen allgemeinen Formel beträgt für dieses Produkt 4.

Komponente B4

104 g 2,2-Dimethyl-1,3-propandiol, 134 g Trimethylolpropan, 74 g n-Butanol und 660 g Malonsäuredimethylester werden in enem Reaktionsgefäß mit Fraktionierkolonne langsam auf 130 °C erwärmt, bis 190 g Methanol als Destillat übergegangen sind. Die Zusammensetzung entspricht einem Index n von 2 bis 3.

Komponente B5

480 g Malonsäurediäthylester und 134 g Trimethylolpropan werden auf 130 °C erwärmt. Unter Kontrolle des Brechungsindex werden mit langamem Temperaturanstieg bis 165 °C 135 g Äthanol als Destillat abgetrennt.

Anschließend werden unter steigendem Vakuum bei 160 °C weitere flüchtige Komponenten abdestilliert, bis der Feststoffgehalt der Reaktionsmasse (Rückstand nach 30 min/bei 120 °C) 95 % beträgt.

Beispiele 1 bis 5

Die erfindungsgemäßen Bindemittelzusammensetzungen werden durch gründliches Mischen der Komponenten A und B bei 50 °C gemäß folgender Übersicht erhalten.

| Beispiel | Komponente A | Komponente B | % Festkörpergehalt d.Mischung | A : B % Festharz |
|---|---|---|---|---|
| 1 | 100 A 3 | 35 B 1 | 74 | 65 : 35 |
| 2 | 123 A 2 | 20 B 2 | 70 | 80 : 20 |
| 3 | 100 A 5 | 30 B 4 | 77 | 70 : 30 |
| 4 | 146 A 6 | 10 B 3 | 64 | 90 : 10 |
| 5 | 163 A 1 | 7 B 4 | 59 | 93 : 7 |

Beispiel 6

Zu den in Komponente A7 hergestellten 2 787 g modifizierter Epoxidharzlösung werden 590 g Komponente B5 zugesetzt und 2 Stunden bei 110 °C vermischt.

In einem zweiten Mischgefäß werden 65 g Ameisensäure (85 %ig in Wasser) und 4 800 g deionisiertes Wasser mit einem intensiven Rührwerk durchmischt. Unter Beibehaltung der intensiven Rührung wird die Kombination der Komponenten A7 und B5 innerhalb einer Stunde gleichmäßig zugegeben. Es bildet sich eine milchige Emulsion.

Ihr Feststoffgehalt wird eventuell durch weitere Wasserzugabe auf 35 % eingestellt.

343 g der Emulsion werden mit 30 g Titandioxidpigment, 30 g Aluminiumsilikatpigment, 0.6 g Ruß und 1 g Bleioctoat (30 % Metallgehalt auf einer Perlmühle zu einer Pigmentpaste angerieben, deren Anteil an flüchtigen organischen Komponenten 0,14 kg auf 1 l Feststoffvolumen beträgt.

Die Pigmentpaste wird durch Zugabe von Wasser auf einen Feststoffgehalt von 18 % verdünnt. Die Beschichtung, Härtung und Prüfung der Überzüge wird wie in den Beispielen 1-5 vorgenommen. Die erhaltenen Resultate der Überzüge entsprechen denen des Beispiels 2.

Prüfung der Bindemittel gemäß Beispiel 1-5

Aus den oben angeführten Bindemittelzusammensetzungen wurden jeweils Proben von 300 g

Festharz mit 87 g Titandioxid, 60 g Aluminiumsilikat und 3 g Rußpigment vermahlen. Nach Dispergierung der Pigmente wurde die zur Protonisierung eingesetzte Säure zugesetzt und mit deionisiertem Wasser auf einen Feststoffgehalt von 15 % verdünnt.

Bei den Beispielen 1, 4 und 5 wurden zusätzlich noch Umesterungskatalysatoren homogen eingemischt.

Aus diesen Bädern wurden Überzüge mittels Gleichstrom auf zinkphosphatierte Stahlbleche, die als Kathode geschaltet waren, abgeschieden, wobei die Badtemperatur bei 25 °C lag und Beschichtungsspannungen zwischen 100 und 250 Volt während 2 Minuten angewendet wurden. Die überzogenen Substrate wurden anschließend mit Wasser gespült und unter den angegebenen Bedingungen gehärtet. Die durchschnittliche Schichtstärke der eingebrannten Filme betrug 15 bis 19 µm.

Die Verarbeitungsbedingungen, Meßwerte und Prüfergebnisse sind in der folgenden Tabelle zusammengefaßt.

Es werden folgende Abkürzungen bzw. Prüfmethoden verwendet :

(Siehe Tabelle Seite 9 f.)

Tabelle

| Beispiel | Katalysator[1)] | Neutralisationssäure | Neutralisationsgrad[2)] | pH-Wert | Schichtstärke | Härtung min/°C | Härte[3)] | Tiefung[4)] | Salzsprühtest[5)] |
|---|---|---|---|---|---|---|---|---|---|
| 1 | Pb | Ameisensäure | 50 % | 6,1 | 18 µm | 20/180<br>30/160 | 185<br>180 | 6,8<br>6,0 | 1000<br>850 |
| 2 | -- | Milchsäure | 80 % | 5,2 | 17 µm | 20/180<br>30/160 | 180<br>170 | 7,0<br>5,5 | 1000<br>750 |
| 3 | -- | Essigsäure | 45 % | 6,1 | 17 µm | 20/180<br>30/160 | 160<br>145 | 7,2<br>7,3 | 900<br>800 |
| 4 | Pb | Ameisensäure | 40 % | 6,0 | 19 µm | 20/180<br>30/160 | 190<br>170 | 6,5<br>6,5 | 900<br>800 |
| 5 | Ti | Essigsäure | 50 % | 5,4 | 20 µm | 20/180<br>30/160 | 150<br>142 | 7,8<br>7,4 | 800<br>600 |

1) Ti : Titanacetylacetonat
Pb : Bleioctoat
Mengen : 0,5 % Metall auf 100 g Bindemittel-Festsubstanz

2) Theoretischer Prozentsatz der neutralisierten Aminogruppen des Bindemittels

3) Pendelhärte nach König DIN 53 157 (Sekunden)

4) Tiefung nach Erichsen DIN 53 156 (mm)

5) Salzsprühtest ASTM B-117-64 :
max. 2 mm Angriff am Kreuzschnitt nach der angegebenen Stundenzahl

**Patentansprüche**

1. Wärmehärtbare kationische, nach Protonisierung der Aminogruppen wasserverdünnbare Bindemittel auf der Basis von Mischungen aus Aminogruppen tragenden Polymeren und einer durch Umesterung bei erhöhter Temperatur mit dem Polymeren filmbildenden Vernetzungskomponente, bestehend aus

(A) 60 bis 95 Gew.-% eines nach Protonisierung der basischen Gruppen wasserlöslichen oder wasserverdünnbaren Polymeren, welches eine Hydroxylzahl von 40 bis 450 mg/KOH/g und eine im wesentlichen auf tertiären Aminogruppen beruhende Aminzahl von 20 bis 150 mg KOH/g aufweist und

(B) 5 bis 40 Gew.-% einer Vernetzungskomponente der allgemeinen Formel

$$R_1 - ( - \overset{\overset{O}{\|}}{C} - CH_2 - \overset{\overset{O}{\|}}{C} - O - R_2)_n$$

wobei n einen Wert von 1 bis 5,

$R_1$ einen nach Reaktion mit einer oder mehreren Carboxylgruppen verbleibenden Rest eines Monoalkoholes mit 1-8 C-Atomen oder eines Polyols oder eines Polyamines oder einer Polyepoxidverbindungen oder eines Polyisocyanats und

$R_2$ einen geradkettigen oder verzweigten Alkylrest mit 1-8 C-Atomen darstellt.

2. Bindemittel gemäß Anspruch 1, dadurch gekennzeichnet, daß man als Komponente (B) Malonsäureester mit einem Siedepunkt von über 200 °C einsetzt.

3. Bindemittel gemäß den Ansprüchen 1 und 2, dadurch gekennzeichnet, daß man als Komponente (B) eine Verbindung einsetzt, in welcher der Polyolrest $R_1$ der Rest eine niedermolekularen Polyesters oder Polymerisates mit endständigen Hydroxylgruppen ist.

4. Bindemittel gemäß den Ansprüchen 1 bis 3, dadurch gekennzeichnet, daß die Komponente (B) ein Molekulargewicht bis zu ca. 5 000 und einen Index n zwischen 2 und 5 aufweist.

5. Verfahren zur Vernetzung von nach Protonisierung der basischen Gruppen wasserverdünnbaren Polymeren, welche eine Hydroxylzahl von 40 bis 450 mg KOH/g aufweisen, dadurch gekennzeichnet, daß man als Vernetzungskomponente 5 bis 40 Gew.-% (bezogen auf Gesamtbindemittelfestkörper) einer Verbindung der allgemeinen Formel

$$R_1 - ( - \overset{\overset{O}{\|}}{C} - CH_2 - \overset{\overset{O}{\|}}{C} - O - R_2)_n$$ einsetzt,

wobei n einen Wert von 1 bis 5,

$R_1$ einen nach Reaktion mit einer oder mehreren Carboxylgruppen verbleibenden Rest eines Monoalkoholes mit 1-8 C-Atomen oder eines Polyols oder eines Polyamins oder einer Polyepoxidverbindung oder eines Polyisocyanates und

$R_2$ einen geradkettigen oder verzweigten Alkylrest mit 1-8 C-Atomen darstellt.

**Claims**

1. Heat hardenable cationic binders water dilutable upon protonation of the amino groups, based on blends of a polymer carrying amino groups and a crosslinking component film forming through transesterification with the polymer, at elevated temperatures, consisting of

(A) 60 to 95 % by weight of a polymer water soluble or water dilutable upon protonation of the basic groups, having a hydroxyl value of between 40 to 450 mg KOH/g and an amine value substantially based on tertiary amine groups of between 20 to 150 mg KOH/g, and

(B) 5 to 40 % by weight of a crosslinking component of the general formula

$$R_1 - ( - \overset{\overset{O}{\|}}{C} - CH_2 - \overset{\overset{O}{\|}}{C} - O - R_2)_n$$

wherein n is a number of from 1 to 5,

$R_1$ is a radical remaining free after reaction with one or more carboxy groups of a monoalcohol with from 1 to 8 C-atoms or a polyol or a polyamine or a polyhydroxy compound or a polyisocyanate, and

$R_2$ is a straight chain or branched alkyl radical with from 1 to 8 C-atoms.

2. Binder according to claim 1, characterised in that as component (B) malonic acid esters with a boiling range of over 200 °C are used.

3. Binders according to claims 1 and 2, characterised in that as component (B) a compound is used

in which the polyol radical $R_1$ is the radical of a low molecular polyester or of a polymer with chain end hydroxy groups.

4. Binder according to claims 1 to 3, characterised in that component (B) has a molecular weight of up to about 5 000 and wherein the index n is between 2 and 5.

5. Process for crosslinking the basic groups of polymers water dilutable upon protonation of the basic groups, carrying a hydroxyl value of between 40 and 450 mg KOH/g, characterised in that as the crosslinking component 5 to 40 % by weight (calculated on total binder solids) of a compound of the general formula

$$R_1 - ( - \overset{O}{\overset{\|}{C}} - CH_2 - \overset{O}{\overset{\|}{C}} - O - R_2)_n$$

wherein n is a number of from 1 to 5,

$R_1$ is a radical remaining free after reaction with one or more carboxy groups of a monoalcohol with from 1 to 8 C-atoms or of a polyol or a polyamine or a polyhydroxy compound or a polyisocyanate, and,

$R_2$ is a straight chain or branched alkyl radical with from 1 to 8 C-atoms.

## Revendications

1. Liants cationiques thermodurcissables, diluables par l'eau après protonisation des groupes amino, à base de mélanges de polymères portant des groupes amino et d'un composant réticulant formant des pellicules par transestérification à température élevée avec le polymère, qui consistent en

(A) 60 à 95 % en poids d'un polymère soluble dans l'eau ou diluable par l'eau après protonisation des groupes basiques, présentant un indice d'hydroxyle de 40 à 450 mg de KOH/g et un indice d'amine, dû essentiellement à des groupes amino tertiaires, de 20 à 150 mg de KOH/g, et

(B) 5 à 40 % en poids d'un composant réticulant de formule générale

$$R_1 - ( - \overset{O}{\overset{\|}{C}} - CH_2 - \overset{O}{\overset{\|}{C}} - O - R_2)_n$$

dans laquelle n est un nombre de 1 à 5,

$R_1$ représente le reste, subsistant après réaction avec un ou plusieurs groupes carboxyle, d'un monoalcool en C1-C8 ou d'un polyol ou d'une polyamine ou d'un composé polyépoxydique ou d'un polyisocyanate, et

$R_2$ représente un groupe alkyle à chaîne droite ou ramifiée en C1-C8.

2. Liants selon la revendication 1, caractérisés en ce que l'on utilise en tant que composants (B) des esters maloniques bouillant à plus de 200 °C.

3. Liants selon les revendications 1 et 2, caractérisés en ce que l'on utilise en tant que composant (B) un composé dans lequel le reste de polyol $R_1$ est le reste d'un polyester ou polymère à bas poids moléculaire portant des groupes hydroxy terminaux.

4. Liants selon les revendications 1 à 3, caractérisés en ce qué le composant (B) a un poids moléculaire allant jusqu'à 5 000 environ et un indice n entre 2 et 5.

5. Procédé pour réticuler des polymères diluables par l'eau après protonisation des groupes basiques, qui présentent un indice d'hydroxyle de 40 à 450 mg de KOH/g, caractérisé en ce que l'on utilise en tant que composant réticulant, en quantité de 5 à 40 % en poids (sur les matières solides du liant total) un composé de formule générale

$$R_1 - ( - \overset{O}{\overset{\|}{C}} - CH_2 - \overset{O}{\overset{\|}{C}} - O - R_2)_n$$

dans laquelle n a une valeur de 1 à 5,

$R_1$ représente le reste, subsistant après réaction avec un ou plusieurs groupes carboxyle, d'un monoalcool en C1-C8 ou d'un polyol ou d'une polyamine ou d'un composé polyépoxydique ou d'un polyisocyanate, et

$R_2$ représente un groupe alkyle à chaîne droite ou ramifiée en C1-C8.